# EUROPEAN PATENT SPECIFICATION

(11) **EP 1 772 606 B1**
(45) Date of publication and mention of the grant of the patent: **13.07.2011**
(21) Application number: 06076637.5
(22) Date of filing: 29.08.2006
(51) Int. Cl.: F01P 11/06, F01P 5/04, B60K 11/08

(54) **Anti-clogging system for air intake grilles for cooling a radiator**
System zur Verhinderung der Verstopfung des Ansauggitters eines Kühlers
Système anti-obstruction de grille de radiateur

(30) Priority: 10.10.2005 IT RE20050115
(43) Date of publication of application: 11.04.2007
(73) Proprietor: BCS S.p.A., 20121 Milan (IT)
(72) Inventor: Castoldi, Fabrizio, 1, Via Paleocapa 20121 Milano (IT)
(74) Representative: Corradini, Corrado

(56) References cited:
- EP-A2- 0 323 212
- DE-A1- 1 476 346
- DE-A1- 10 115 596

## Description

The present invention refers to an anti-clogging system for air intake grilles for the cooling of a radiator housed within an engine compartment of a motor vehicle.

More in particular, the present invention refers to a system which permits keeping clean the cooling air intake grilles which are situated on the hood of the engine compartment housing a radiator with intake cooling fan.

As it is known, the endothermic motors of a motor vehicle function correctly if they do not exceed a certain maximum operating temperature, typical of the motor in use. Usually, such cooling of the motor is carried out with the air arriving frontally from the outside, in the opposite direction to the moving direction. Therefore, as the speed increases, the flow of air is increased which hits the radiator through which the cooling liquid passes, and hence the cooling capacity is increased.

In the generally water-based fluid cooling systems, by means of a radiator an intake cooling fan is also foreseen. The radiator is placed in front of the motor, with respect to the moving direction, and has a wide finned surface so to improve the heat exchange between the outside air and the water which runs inside the radiator. When the moving speed of the motor vehicle is not sufficient to ensure the minimum heat exchange necessary between the water in the radiator and the outside air, a suitable cooling fan is actuated which is placed on the back surface of the radiator such to intake the hot air of the radiator, increasing the flow of new air from the outside.

So that the cooling of the radiator water occurs in the quickest possible manner, and in order to avoid the overheating of the motor, with consequent reduced use of the cooling fan and improved operating conditions of the motor, it is necessary that the heat exchange surface of the radiator, externally formed by fins, is always clean. To such end, the hood portion of the engine compartment surrounding the radiator is provided with an intake grille which filters the outside air sucked in by the cooling fan before it reaches the radiator surface, holding on its outside-facing surface all of the particles of greater size than the grilles openings.

Over time, such grilles tend to clog up, blocking the air intake by the intake fan of new air coming from the outside towards the inside of the engine compartment, where the radiator is placed.

Hence, it is necessary to carry out cleaning operations with a certain frequency, for example manually operating with a spray of water, with the motor vehicle stopped. This need is even greater when the outside air has a great amount of large particles which clog up the grilles, a very common situation in environments wherein farming tractors operate since these are more exposed to dust, debris or other elements such as the chaff resulting from the threshing, etc.

There is therefore the great need to have available an anti-clogging system for air intake grilles for the cooling of a motor vehicle radiator which permits keeping the surface of the grilles clean without having to manually operate and/or stop the motor vehicle itself, so to permit an intake cooling fan to effectively operate, within the scope of a simple and economical constructive solution.

The document DE 101 15 596 discloses an anti-clogging system of a filtering surface of air intake for the cooling of a radiator housed within the engine compartment of a motor vehicle.

The cooling air is sucked from the outside through said filtering surface by means of an intake cooling fan. The system comprises a blower fan housed in said engine compartment and adapted to generate an air flow in counter-current with respect to the air flow sucked by the cooling fan so to blow towards the outside possible particles held by the filtering intake surface, the axis of rotation of said blower fan and cooling fan being aligned and the blower fan having a diameter near to the diameter of the cooling fan.

The system presents the drawback that the blower fan, while it is not operative, it constitutes an obstacle to the natural flow of fresh air to the radiator due to the forward motion of the vehicle.

Object of the present invention is that of providing an anti-clogging system for cooling air intake grilles having structural and functional characteristics such to satisfy the aforesaid needs and to overcome at the same time the drawbacks stated with reference to the prior art.

Such object is attained by means of an anti-clogging system in accordance with claim 1.

The dependent claims outline preferred and particularly advantageous embodiments of the anti-clogging system according to the invention.

Further characteristics and advantages of the invention are evident from the reading of the following description provided as exemplifying and not limiting, with the aid of the figures illustrated in the attached tables, wherein:

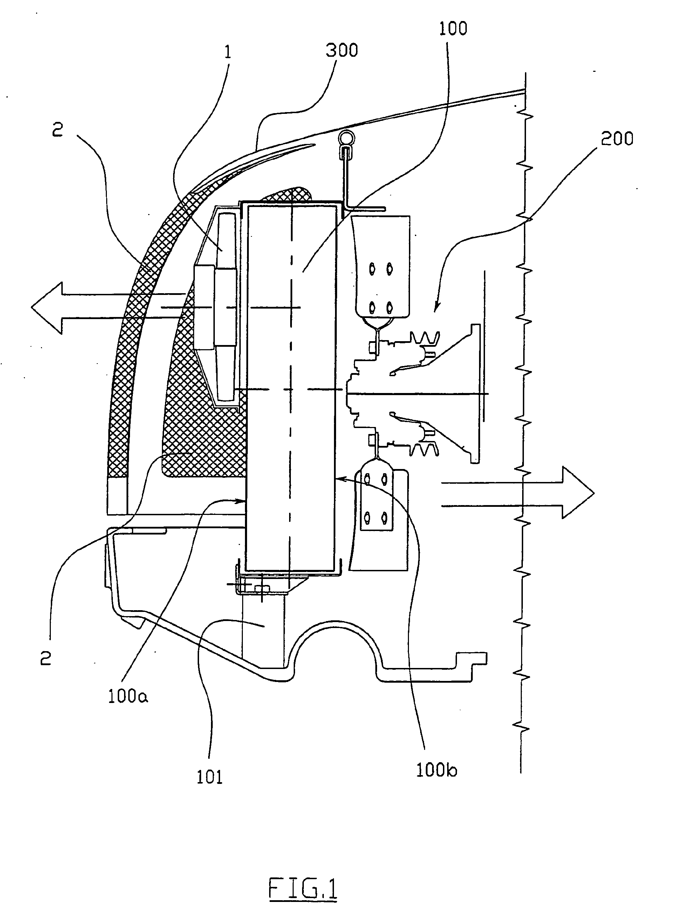

- Figure 1 shows a schematic, sectional view along the line I-I of figure 2 of an anti-clogging system for air intake grilles for cooling a radiator housed within an engine compartment of a motor vehicle, in accordance with the present invention;
- Figure 2 shows a front schematic view of the system of figure 1.

In the figures, an anti-clogging system is illustrated for intake grilles 2 of cooling air for a radiator 100 housed within the engine compartment of a motor vehicle, in accordance with the present invention.

The system comprises a blower fan 1, described below, associated with the surface of the radiator 100, which is fixed to the bodywork of the engine compartment by means of a clip 101 according to the prior art.

The radiator 100 has a parallelepiped conformation with the longest faces 100a and 100b placed perpendicular to the normal advancing direction of the vehicle.

On the back of the radiator 100, an intake cooling fan 200 is fixed, placed in rotation through a suitable electromagnetic friction which transmits the motion of the motor shaft to the fan 200 itself.

Such cooling fan 200 is actuated by a thermostat which drives it into rotation when the temperature of the cooling fluid circulating in the radiator 100 exceeds a certain predetermined maximum temperature. The same thermostat stops the fan 200 once the temperature has returned below a predetermined minimum operation temperature.

Operatively, the cooling fan 200, when it is in function, sucks the hot air from the radiator 100 and draws a flow of new air from the outside through the grilles 2.

In the example, the grilles 2 are fixed to the hood 300 of the engine compartment so to be arranged in front of the radiator 100, when the hood 300 is closed. Essentially, the cooling air sucked by the cooling fan 200 is forced to cross the grilles 2 in order to reach the radiator 100, as is known in the field.

The blower fan 1 is fixed to the clip 101 which supports the radiator 100 and at least partially covers the surface 100a of the radiator 100, opposite the surface where the cooling fan 200 is interposed, so that the radiator 100 is interposed between the two fans 1 and 200.

In particular, the blower fan 1 occupies a limited portion of the inner surface 100a of the radiator 100, so to leave most of the remaining surface 100a of the radiator 100 free to be crossed by the outside air which has crossed the grilles 2.

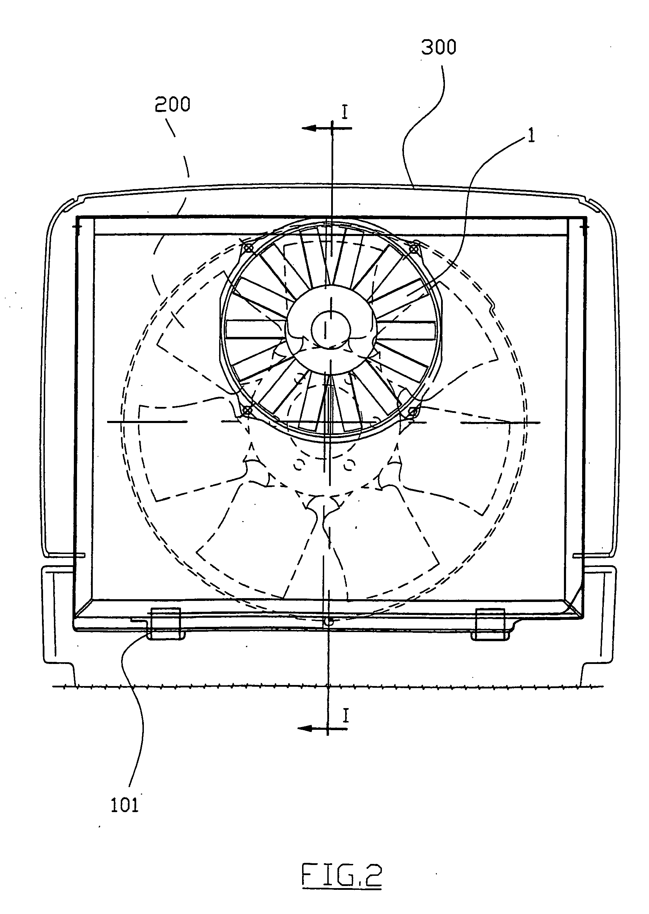

In the example, the blower fan 1 is placed on the upper half of the surface 100a of the radiator 100 with its own axis placed higher and parallel to the axis of the cooling fan 200 (Fig. 2).

The blower fan 1 is shaped such that it generates an axial air flow against the grilles 2, counter-current with respect to the flow of air sucked by the cooling fan 200.

In practice, the blower fan 1, when it is in function, pushes an air flow from the radiator 100 towards the outside, i.e. ahead with respect to the normal moving direction.

Due to this arrangement, the blower fan 1 permits pushing towards the outside possible particles held by the intake grilles 2.

Operatively, the blower fan 1 begins to function only when the cooling fan 200 is deactivated.

Hence, when the temperature of the cooling fluid exceeds the threshold of the maximum operating temperature, the cooling fan 200 is actuated and the blower fan 1 cannot be operated. When, on the other hand, the cooling fan 200 is not operating, the blower fan 1 can operate its cleaning action of the air intake grilles 2.

The blower fan 1 can be actuated by means of already known modes, for example electrically.

For such purpose it is possible to foresee an electronic control unit which can effectively manage the blower cycles of the blower fan 1, taking into consideration the inactivity required by the cooling fan 200, during its functioning.

Alternatively, a simple thermostat can actuate the blower cycles.

Finally, it should be understood that by grilles, in the aforesaid description, it is intended any surface adapted to filter the air coming from outside of an engine compartment used for cooling the radiator housed inside the compartment.

As can be appreciated from that described above, the anti-clogging system for air intake grilles for cooling a radiator housed within an engine compartment according to the present invention permits satisfying the needs and overcoming the drawbacks stated in the introductive part of the present description with reference to the prior art.

In fact, the anti-clogging system according to the present invention can be housed in the engine compartments of conventional tractors with simple modifications.

Of course, a man skilled in the art, in order to satisfy contingent and specific needs, can make numerous modifications and variations to the anti-clogging system for air intake grilles for the cooling of a radiator housed within a motor vehicle as described above, all contained within the protective scope of the invention as defined by the following claims.

## Claims

1. Anti-clogging system of a filtering surface (2) of air intake for the cooling of a radiator (100) housed within the engine compartment of a motor vehicle, said cooling air being sucked from the outside through said filtering surface (2) by means of an intake cooling fan (200), comprising a blower fan (1) housed in said engine compartment and adapted to generate an air flow in counter-current with respect to the air flow sucked by the cooling fan (200), so to blow towards the outside possible particles held by the filtering intake surface (2), **characterized in that** the rotation axes of the blower fan (1) and of the cooling fan (200) are parallel and misaligned and the blower fan occupies a limited portion of the inner surface of the radiator (100), the blower fan having a diameter substantially smaller than the diameter of the cooling fan.

2. System according to claim 1, wherein the blower fan (1) is fixed on said radiator (100).

3. System according to claim 1, wherein said blower fan (1) is situated opposite the cooling fan (200), said radiator (100) being interposed between the fans.

4. System according to claim 1, wherein said blower fan (1) is placed in front of said radiator (100), with respect to the normal advancing direction of the motor vehicle.

5. System according to claim 1, wherein said blower fan (1) and said cooling fan (200) operate in a non-simultaneous manner.

6. System according to claim 1, wherein said rotation axes lie on a common vertical plane.

7. Motor vehicle provided with an anti-clogging system according to claim 1.

## Patentansprüche

1. Verstopfungsschutzsystem für eine Filterfläche (2) eines Lufteinlasses für die Kühlung eines im Motorraum eines Kraftfahrzeugs untergebrachten Kühlers (100), wobei die Kühlluft durch diese Filterfläche (2) mit Hilfe eines Sauglüfters (200) von außen angesaugt wird, das ein Gebläse (1) umfasst, das im Motorraum untergebracht und geeignet ist, einen Luftstrom im Gegenstrom zu dem vom Lüfter (200) angesaugten Luftstrom zu erzeugen, um mögliche Partikel nach außen zu blasen, die von der Saugfilterfläche (2) zurückgehalten werden, **dadurch gekennzeichnet, dass** die Drehachsen des Gebläses (1) und des Lüfters (200) parallel und zueinander versetzt sind und dass das Gebläse einen begrenzten Teil der inneren Oberfläche des Kühlers (100) belegt, wobei das Gebläse einen im wesentlichen kleineren Durchmesser als der Lüfter hat.

2. System nach Anspruch 1, bei dem das Gebläse (1) auf dem Kühler (100) befestigt ist.

3. System nach Anspruch 1, bei dem das Gebläse (1) gegenüber dem Lüfter (200) angeordnet ist, wobei der Kühler (100) zwischen die Verdichter eingefügt ist.

4. System nach Anspruch 1, bei dem das Gebläse (1) bezogen auf die normale Fahrtrichtung des Kraftfahrzeugs vor dem Kühler (100) angeordnet ist.

5. System nach Anspruch 1, bei dem das Gebläse (1) und der Lüfter (200) nicht simultan arbeiten.

6. System nach Anspruch 1, bei dem die Drehachsen in einer gemeinsamen senkrechten Ebene liegen.

7. Kraftfahrzeug, das mit dem Verstopfungsschutzsystem nach Anspruch 1 versehen ist.

## Revendications

1. Système anti-encrassement d'une surface filtrante (2) d'une entrée d'air pour le refroidissement d'un radiateur (100) logé à l'intérieur du compartiment moteur d'un véhicule motorisé, ledit air de refroidissement étant aspiré de l'extérieur à travers ladite surface filtrante (2) au moyen d'un ventilateur de refroidissement d'aspiration (200), comprenant un ventilateur soufflant (1) logée dans ledit compartiment moteur et adaptée pour générer un flux d'air à contre-courant par rapport au flux d'air aspiré par le ventilateur de refroidissement (200), de manière à souffler vers l'extérieur d'éventuelles particules retenues par la surface d'entrée filtrante (2), **caractérisé en ce que** les axes de rotation du ventilateur soufflant (1) et du ventilateur de refroidissement (200) sont parallèles et désalignés et la ventilateur soufflant occupe une portion limitée de la surface intérieure du radiateur (100), le ventilateur soufflant ayant un diamètre sensiblement inférieur au diamètre du ventilateur de refroidissement.

2. Système selon la revendication 1, **caractérisé en ce que** ledit ventilateur soufflant (1) est fixée sur ledit radiateur (100).

3. Système selon la revendication 1, **caractérisé en ce que** ledit ventilateur soufflant (1) est située opposé au ventilateur de refroidissement (200), ledit radiateur (100) étant interposé entre les ventilateurs.

4. Système selon la revendication 1, **caractérisé en ce que** ledit ventilateur soufflant (1) est placé devant ledit radiateur (100), par rapport à la direction normale de déplacement en avant du véhicule motorisé.

5. Système selon la revendication 1, **caractérisé en ce que** ledit ventilateur soufflant (1) et ledit ventilateur de refroidissement (200) fonctionnent de manière non simultanée.

6. Système selon la revendication 1, **caractérisé en ce que** lesdits axes de rotation se trouvent dans un plan vertical commun.

7. Véhicule motorisé muni d'un système anti-encrassage selon la revendication 1.
